Europäisches Patentamt

European Patent Office

Office européen des brevets

(19)

(11) Publication number: 0 012 012
A1

(12) EUROPEAN PATENT APPLICATION

(21) Application number: 79302716.0

(22) Date of filing: 29.11.79

(51) Int. Cl.³: B 25 B 29/02
F 16 B 31/00

(30) Priority: 30.11.78 GB 4675378

(43) Date of publication of application:
11.06.80 Bulletin 80/12

(84) Designated Contracting States:
DE FR GB SE

(71) Applicant: W. Christie (Industrial) Limited
58-62 Seaward Street
Glasgow, G41 1HG Scotland(GB)

(72) Inventor: Porter, Terence John
283 East Bawtry Road
Rotherham, Yorkshire(GB)

(74) Representative: Huskisson, Frank Mackie et al,
14-18 Cadogan Street
Glasgow, G2 6QW(GB)

(54) Method of securing together interengaging parts by means of screwthreaded fasteners, tensioning apparatus, and assembly comprising interengaging parts and fastener.

(57) Tensioning apparatus (6) for screwthreaded fasteners (5), for example studs and bolts, mounted in holes (4) in intergegaging parts (1, 2, 3) to be secured together, for example casing flanges, usually includes an hydraulic piston-and-cylinder device whereof the cylinder (18) during tensioning of a fastener is supported on the portions of the interengaging parts between the fasteners. Such tensioning apparatus cannot be used when the fasteners are mounted close together. This is a serious problem, which is now overcome by providing in the hole in the interengaging parts fastening means including a tubular screwthreaded fastener to provide an assembly having an axial bore therein and a closure (12) at an end of the bore, inserting a rod (16) endwise into the axial bore of the assembly so that the rod abuts the end closure, and connecting the cylinder of an hydraulic piston-and-cylinder device to the fastener at the end thereof remote from the closure so that on actuation of the device to tension the fastener there is a thrust by the piston (19) of the device against the closure through the medium of the rod. As the cylinder of the hydraulic device is now fitted to a projecting end portion of the fastener instead of being applied to the interengaging parts, tensioning of the fasteners on the parts can be effected quickly and efficiently even when the fasteners are in close proximity to one another.

./...

Fig. 1.

## IMPROVEMENTS IN OR RELATING TO THE TENSIONING OF SCREW-THREADED FASTENERS IN SECURING TOGETHER INTERENGAGING PARTS

This invention relates to the tensioning of screwthreaded fasteners including studs and bolts in securing together interengaging parts such for example as opposed flanges of a composite machine casing.

The usual tensioning means in use at present include an hydraulic piston-and-cylinder device whereof the cylinder is supported at the periphery of the fastener on one of the interengaging parts for reaction against said part. It will be appreciated that the size of the peripheral reaction zone and the size of the cylinder increase as the load requirements on the fastener increase. Consequently, where the space between fasteners is small, as for example, in the casings of turbine generators, in split-casing type pumps, and in high-pressure split-casing compressors, it is impossible to use the existing tensioning means. In fact, the inter-fastener distances are frequently so small that round nuts or heads must be used instead of the usual hexagonal nuts or heads. To effect tightening of the fasteners in these situations, instead of using tensioning means, the fasteners are made hollow or tubular to accomodate a heater. With the hollow fastener elongated by heating, it is tightened to abut the adjacent part so that the fastener on cooling is tensioned. However, uniform internal heating of the fasteners is difficult and time-consuming, and fails to provide the speedy and accurate stud tensioning required by industry.

The object of the present invention is to provide for quick and efficient tensioning of the fasteners even when they are mounted in close proximity to one another on the machine casing.

According to the present invention we provide a method of securing together interengaging parts by means of screwthreaded fasteners, comprising mounting in a hole in the interengaging parts a tubular screwthreaded fastener to provide an assembly having an axial bore therein and

0012012

a closure at an end of the bore, and tensioning the fastener, to stretch same including transmitting thrust through the axial bore to the closure.

By tightening the tensioned fastener and removing the tension from the tightened fastener, further tightening is effected.

Preferably, the tensioning of the fastener includes inserting a rod endwise into the axial bore of the assembly so that the rod abuts the closure and connecting the cylinder of an hydraulic piston-and-cylinder device to the fastener at the end of the fastener remote from the closure so that on acutation of the device there is a thrust by the piston of the device against the closure through the medium of the rod.

By directing tensioning thrust axially through the centre of the fastener instead of against the parts around the periphery of the fastener, the tensioning means can readily be fitted to fasteners mounted in awkward positions formerly considered inaccessible to tensioning means.

Further according to the present invention we provide apparatus for use in tensioning a tubular screwthreaded fastener mounted in a hole in interengaging parts to provide an assembly having an axial bore therein and having a closure at an end of the axial bore, comprising an hydraulic piston-and-cylinder device whereof the cylinder is detachably connectible to an end portion of the fastener remote from the closure so that on operation of the device to stretch the fastener thrust is applied by the piston to the closure through a medium in the axial bore.

Preferably the apparatus includes a rod for insertion endwise into the axial bore of the assembly to abut the closure at the end of the bore and form the thrust medium.

In one form of assembly the fastener has an axial through-bore therein, and a screwthreaded end portion of the fastener is engaged by a cap nut which may be a nut of the fastener or may be additional to the nut or nuts of the fastener, said cap nut forming a closure for the end of the assembly bore.

In another form of assembly the axial bore is a blind axial bore in the fastener so that an end portion of the fastener provides the end closure for the assembly bore.

In yet another form of assembly the fastener has a through bore therein and a screwthreaded end portion of the fastener is engaged in a tapped blind hole in one of the interengaging parts so that said one part provides the end closure for the assembly bore.

In a modification of the tensioning apparatus, instead of having a separate thrust rod, a plunger on the piston is slidingly engageable in the assembly bore to act on hydraulic fluid added to the assembly bore.

It will be understood that the tensioning apparatus can be operated singly or in groups, and can be used with a pneumatically or electrically powered hydraulic Power Pac or with a hand-operated hydraulic pump.

Embodiments of the invention will now be described by way of example with reference to the accompanying diagrammatic drawings in which:-

Fig. 1 is a sectional plan view of a flange-and-fastener assembly including a tubular fastener to which assembly tensioning apparatus is operatively connected.

Fig. 2 is a transverse sectional view on the line II-II of Fig. 1.

Fig. 3 is a fragmentary sectional view of a modification of the assembly of Fig. 1.

Fig. 4 is a fragmentary sectional view of another modification of the assembly of Fig. 1.

Fig. 5 is a sectional plan view on the lines of Fig. 1, showing an alternative form of flange-and-fastener assembly.

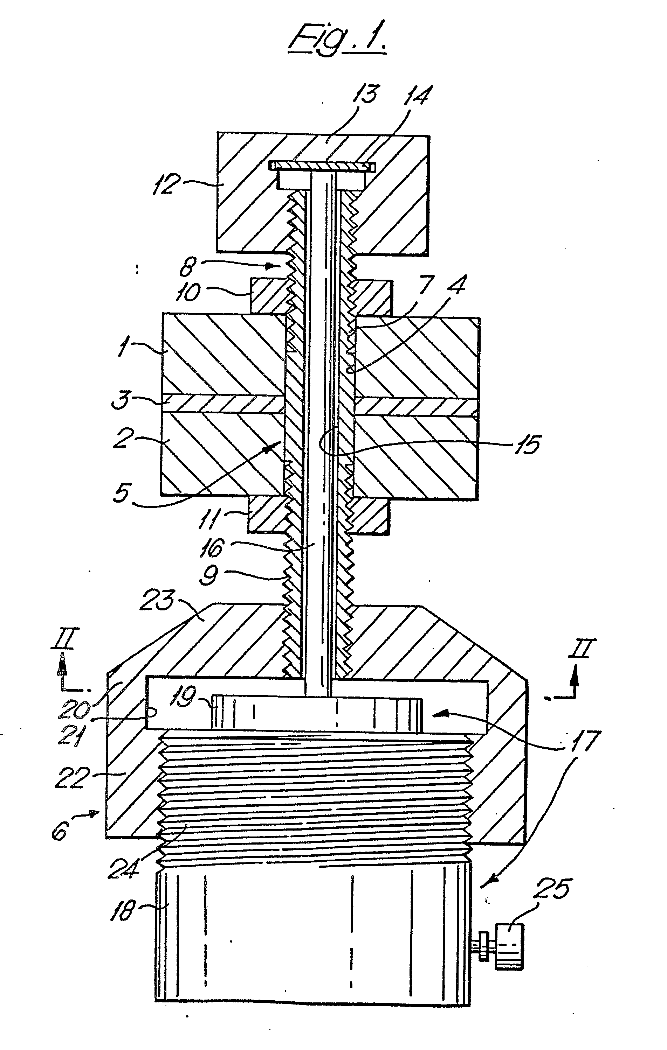

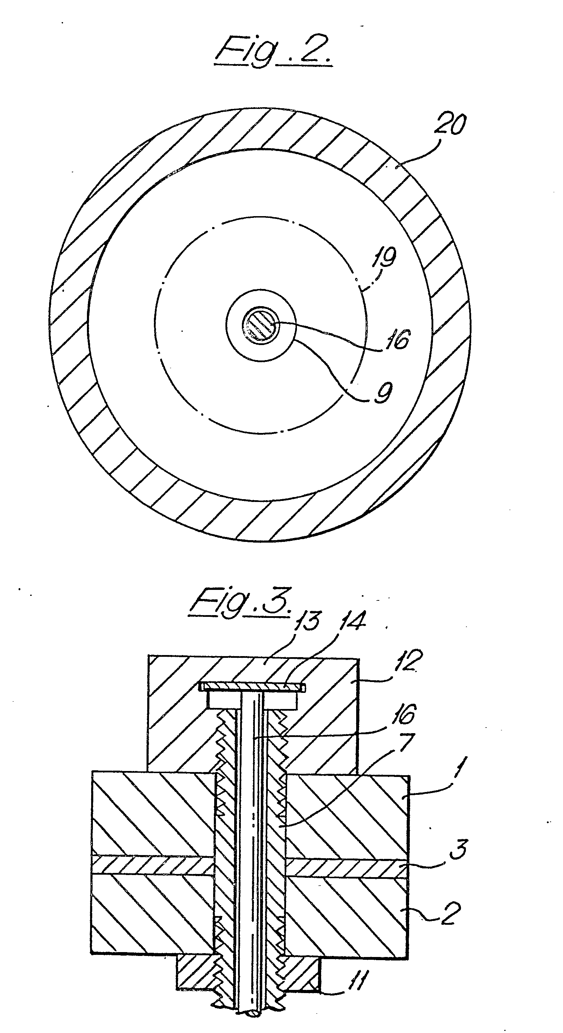

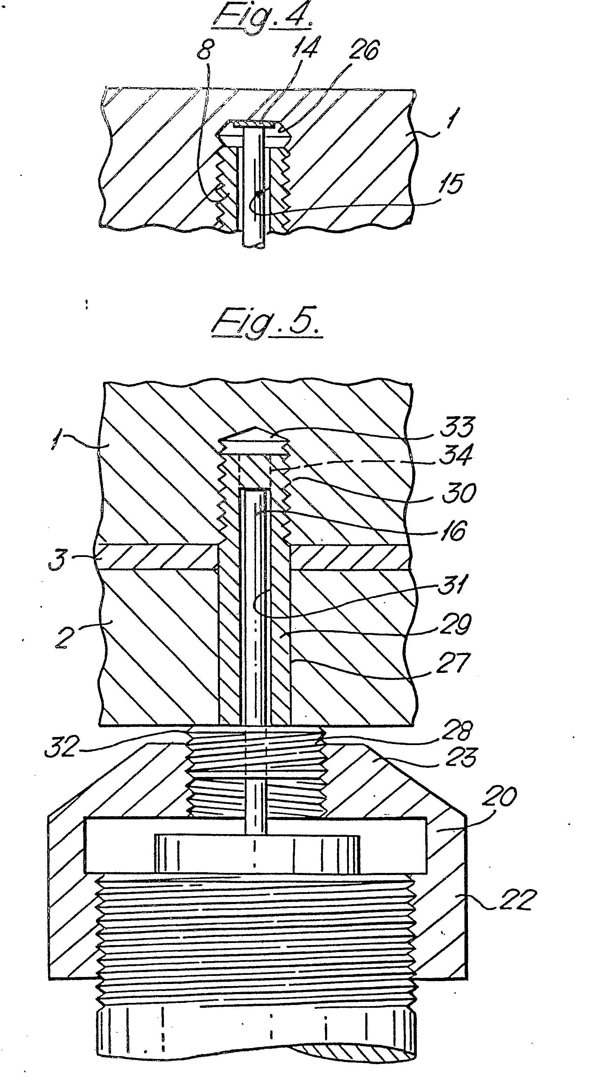

Referring to Figs. 1 and 2, the interengaging parts to be secured together consist of a pair of opposed flanges 1 and 2 of a composite machine casing, and a gasket 3

between the flanges. The parts are secured together by a method including first mounting in a through-hole 4 in the composite parts a tubular, screwthreaded fastener 5, so that the fastener and the composite parts together form an assembly.

.The fastener 5 consists of a tubular stud 7 whereof screwthreaded end portions 8 and 9 project from opposite ends of the hole 4, a pair of nuts 10 and 11 on the respective end portions 8 and 9 and hand-tight against the respective flanges, and a cap nut 12 on the end portion 8. The end wall 13 of the cap nut 12 has on its inner face a thrust plate 14. Thus the assembly has therein an axial bore 15 closed at one end by the end wall 13 of the cap nut 12.

The second step of the method of secural consists in mounting on the fastener 5 tensioning apparatus 6 including a thrust rod 16 and a ram-and-cylinder device 17. The device 17 includes a cylinder 18, a ram 19 reciprocable in the cylinder 18 and a coupling sleeve 20 having a stepped bore 21 and tapped end portions 22 and 23, the end portion 22 engaging a threaded end portion 24 of the cylinder 18. To mount the tensioning apparatus, the thrust rod 16 is inserted endwise into the axial bore 15 so that an end face of the rod abuts the thrust plate 14, and then the end portion 23 of the sleeve 20 is screwed on to the threaded end portion 9 of the stud 7 until the ram 19 abuts the other end face of the rod 16.

The third step of the method of secural consists in supplying hydraulic fluid at a predetermined pressure to the cylinder 18 through a flexible pipe (not shown) connected to a pipe coupling 25 on the cylinder. With this step the rod 16 and the cap nut 12 draw one end of the stud 7, while the sleeve 20 draws the other end of the stud which is thus stretched. With the stud stretched, the nuts 10 and 11 are spaced slightly from the flanges.

The fourth step of the method of secural consists in hand-tightening the nuts 10 and 11 against the flanges 1 and 2.

The fifth step of the secural consists in releasing the pressurized fluid in the cylinder 18 to remove the stretching forces from the stud 7 so that the strain in the stud tightens the nuts 10 and 11 still further against the flanges.

The sixth and final step of the method of secural consists in removing from the stud 7 the tensioning apparatus 6 and the cap nut 12.

When the studs 7 are of various sizes, it is a simple matter to remove the coupling sleeve from the cylinder 18 and replace it by a similar coupling sleeve of a size appropriate to the stud.

Preferably the ram-and-cylinder device 17 embodies a compression spring (not shown) operable to return the ram to its initial position following release of the hydraulic pressure in the device.

Referring to Fig. 3, the nut 10 is omitted and the cap nut 12 is mounted on the stud 7 to serve both as a retaining mut and as an end closure for the bore of the assembly.

Referring to Fig. 4, the end portion 8 of the stud 7 is screwed into a tapped, blind hole 26 in the flange 1, and the thrust plate 14 is provided on the end face of the hole so that the flange 1 serves as the end closure for the bore 15 on the assembly.

Referring to Fig. 5, the tubular fastener consists of a bolt 27 whereof the head 28 engages the flange 2. External threads 32 on the head 28 are engaged by the portion 23 of the coupling sleeve 20, while the stem 29 of the bolt has a screwthreaded end portion 30 engaging in a tapped, blind hole 33 in the flange 1. A blind, axial bore 31 through the bolt 27 houses the thrust rod 16 whereof an end face abuts the end face of the blind bore 31. The bore 31 is produced by forming a through-bore in the bolt 27 and closing an end of the through-bore with a plug 34 which is hardened to take the thrust of the rod 16. With the bolt in stretched condition, it is tightened to move the head 28 into engagement with the flange 2, whereupon the hydraulic pressure is released to permit the strain to effect further tightening of the bolt.

By providing an appropriate size of ram-and-cylinder device and an hydraulic fluid of suitable pressure, it is possible to load the fastener accurately, as required by the manufacturer.

Advantages of the present invention are

(a) The thrust base area is contained within the tubular fastener.

(b) The cylinder of the ram-and-cylinder device is located over and not around the projecting end of the fastener.

(c) The tensioning apparatus as distinct from existing tensioning apparatus is able to tension fasteners located on turbine generators, split-casing type pumps and high pressure split-casing compressors, and indeed on any other machinery embodying fasteners which are in extreme proximity to each other.

## CLAIMS

1. A method of securing together interengaging parts by means of screwthreaded fasteners, comprising mounting in a hole in the interengaging parts a tubular screwthreaded fastener to provide an assembly having an axial bore therein and a closure at an end of the bore, and tensioning the fastener to stretch same including transmitting thrust through the axial bore to the closure.

2. A method according to claim 1, including tightening the fastener following the tensioning, and removing the tension from the tightened fastener to permit further tightening of the fastener.

3. A method according to claim 1 or 2, wherein the tensioning of the fastener includes inserting a rod endwise into the axial bore of the assembly so that the rod abuts the closure, and connecting the cylinder of an hydraulic piston-and-cylinder device to the fastener at the end of the fastener remote from the closure so that on accuation of the device there is a thrust by the piston of the device against the closure through the medium of the rod.

4. A method according to claim 3, wherein the axial bore of the assembly is a blind axial bore in the fastener so that an end portion of the fastener serves as the end closure for the bore.

5. A method according to claim 3, wherein the fastener has a through bore therein and a screwthreaded end portion of the fastener is engaged in a tapped blind hole in one of the interengaging parts so that said one part provides the end closure of the assembly bore.

6. A method according to claim 3, wherein the fastener has a through bore in a step, a screwthreaded end portion of the stem is engaged by a cap nut which provides the end closure for the assembly bore.

7. A method according to any one of claims 4 to 6, wherein the end closure includes an internal seat for engagement by the end face of the rod.

8. A method of securing together interengaging parts by means of screwthreaded fasteners, substantially as hereinbefore described.

9. An assembly comprising a plurality of interengaging parts and a tubular screwthreaded fastener mounted in a hole in the parts and tensioned by the method of any one of claims 1 to 8.

10. Apparatus for use in tensioning a tubular screwthreaded fastener mounted in a hole in interengaging parts to provide an assembly having an axial bore therein and having a closure at an end of the axial bore, comprising an hydraulic piston-and-cylinder device whereof the cylinder is detachably connectible to an end portion of the fastener remote from the closure so that on operation of the device to stretch the fastener thrust is applied by the piston to the closure through a medium in the axial bore.

11. Apparatus according to claim 10, including a rod for insertion endwise into the axial bore of the assembly to abut the closure at the end of the bore and form the thrust medium.

12. Apparatus according to claim 11, wherein the cylinder of the piston-and-cylinder device has thereon at one end thereof, a tapped sleeve forming an axial extension which is engageable with a threaded end portion of the fastener to locate the piston face opposite an end face of the inserted rod.

13. Apparatus according to claim 12, wherein the tapped sleeve is in screw-threaded engagement with the cylinder of the device so as to be removable from the cylinder.

14. Apparatus according to claim 12 or 13, wherein the tapped sleeve on the cylinder of the device is engageable with a projecting screwthreaded end portion of a stud-and-nut arrangement constituting the fastener .

15. Apparatus according to claim 12 or 13, wherein the tapped sleeve on the cylinder of the device is engageable with the screwthreaded head of a bolt constituting the fastener.

16. Apparatus for use in tensioning a tubular screw-threaded fastener mounted in a hole in interengaging parts to provide an assembly having an axial bore therein and having a closure at an end of the axial bore, substantially as hereinbefore described with reference to the accompanying drawings.

0012012

Fig.1.

## Fig .2.

20
19
16
9

## Fig.3.

13  14
12
16
7
1
3
2
11

## Fig.4.

## Fig.5.

**EUROPEAN SEARCH REPORT**

9012012

Application number

EP 79 30 2716

| Category | Citation of document with indication, where appropriate, of relevant passages | Relevant to claim |
|---|---|---|
| **DOCUMENTS CONSIDERED TO BE RELEVANT** | | |
| X | CH - A - 400 677 (ESCHER WYSS) <br> * Figures 1-3 * <br><br> -- | 1-16 |
| X | GB - A - 1 511 300 (THE ENGLISH ELECTRIC) <br> * Figure 1 * <br><br> -- | 1-16 |
| X | GB - A - 1 382 192 (PILGRIM) <br> * Figure 1 * <br><br> ---- | 1-16 |

**CLASSIFICATION OF THE APPLICATION (Int. Cl. 3)**

B 25 B 29/02
F 16 B 31/00

**TECHNICAL FIELDS SEARCHED (Int.Cl. 3)**

B 25 B
B 23 P

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 06-03-1980 | LOKERE |

EPO Form 1503.1   06.78